# EUROPEAN PATENT SPECIFICATION

(11) **EP 0 957 481 B1**
(45) Date of publication and mention of the grant of the patent: **27.09.2006**
(21) Application number: 99401151.8
(22) Date of filing: 10.05.1999
(51) Int. Cl.: G11B 17/028, G11B 19/20

(54) **Drive disk with compensation of disk eccentricity**
Plattenantrieb mit Kompensation der Plattenexzentrizität
Lecteur de disque compensant l'excentricité des disques

(30) Priority: 15.05.1998 EP 98401163
(43) Date of publication of application: 17.11.1999
(73) Proprietor: DEUTSCHE THOMSON-BRANDT GMBH, 78048 Villingen-Schwenningen (DE)
(72) Inventor: Oldermann, Klaus, Thomson multimedia Lic. & IP, 92648 Boulogne Billancourt (FR); Schroeder, Heinz-J, Thomson multimedia Lic. & IP, F-92648 Boulogne Billancourt (FR)
(74) Representative: Zhang, Jianguo

(56) References cited:
- DE-A- 3 146 186
- GB-A- 1 469 483
- GB-A- 2 056 747
- GB-A- 2 307 327
- JP-A- 8 195 010
- US-A- 4 101 945
- US-A- 4 730 300
- US-A- 5 280 465
- US-A- 5 610 900
- US-A- 5 633 856
- PATENT ABSTRACTS OF JAPAN vol. 095, no. 006, 31 July 1995 (1995-07-31) -& JP 07 085582 A (HITACHI LTD), 31 March 1995 (1995-03-31)
- PATENT ABSTRACTS OF JAPAN vol. 012, no. 473 (P-799), 12 December 1988 (1988-12-12) -& JP 63 191360 A (MATSUSHITA ELECTRIC IND CO LTD), 8 August 1988 (1988-08-08)
- PATENT ABSTRACTS OF JAPAN vol. 011, no. 375 (P-644), 8 December 1987 (1987-12-08) -& JP 62 145562 A (MATSUSHITA ELECTRIC IND CO LTD), 29 June 1987 (1987-06-29)
- PATENT ABSTRACTS OF JAPAN vol. 097, no. 011, 28 November 1997 (1997-11-28) -& JP 09 198761 A (PIONEER ELECTRON CORP), 31 July 1997 (1997-07-31)
- PATENT ABSTRACTS OF JAPAN vol. 098, no. 013, 30 November 1998 (1998-11-30) -& JP 10 208377 A (MATSUSHITA ELECTRIC IND CO LTD), 7 August 1998 (1998-08-07)

## Description

The present invention relates to a device used for rotating disk shaped data carriers inside of disk player and / or recorders.

A disk player and / or recorder is used to read and / or write on disk shaped data carriers. Different types of disk shaped data carriers are known, e.g. magnetical and optical disk shaped data carriers. Data may be stored along tracks which form for example concentrical circles or a spiral on the disk shaped data carrier. The disk shaped data carriers typically have an opening at a center, which ideally has substantially a common center with the disk shaped data carrier and the concentrical circles or the spiral. The disk shaped data carrier is rotated by driving means which are linked directly or indirectly to its opening, i.e. the driving means' rotation axis is made to correspond with the center of the disk. The data is read using reading means which follow the track. A servo system determines if the reading means deviate from the track being followed and if necessary move the reading means to reposition them on the track. The better the driving means' rotation axis corresponds to the center of the disk, the better the concentrical circles or spiral rotate around their own center and the less the servo system has to correct deviations to compensate for an eccentricity of the concentrical circle's or the spiral's rotation.

A data reading and / or writing rate of a disk player and / or recorder depends for a part on a disk's rotation speed. The reading and / or writing rate may for example be increased with a higher rotation speed of the disk. Typically a new problem arises in the disk player and / or recorder at higher rotation speeds. The player and / or recorder starts to vibrate, become more noisier and eventually to generate a greater number of reading and / or writing errors because the servo system may not anymore keep the reading means on track.

One reason for the new problem lies in the mass distribution of the disk shaped data carrier and parts fixed to it during its rotation. More precisely a mass center of the disk shaped data carrier and parts fixed to it may be located aside of the rotation axis imposed by the driving means and, as a result, the rotation of the disc generates forces which draw the disk away from the imposed rotation axis. The displacement of the mass center can be caused by labels on the disk, imperfect manufacturing of the disk, erroneous centering of the opening or other reasons. But it may also be related to the disk player and / or recorder itself.

A known solution to overcome the problems related to higher rotation speeds is to reduce the rotation speed until an acceptable level of noise, vibration and / or number of reading/writing errors is achieved. This of course reduces the data reading and / or writing rate.

US 4,730,300 discloses a disk playback device of a type in which a turntable is connected to a disk motor shaft, having a disk centering device comprising at least three disk centering members provided in the turntable substantially concentrically with the disk motor shaft and separately moveable in the radial direction of the turntable, the centering members being capable of engaging a central opening of a disk, and urging means provided in the turntable for urging the centering members radially outwardly of the turntable. The centering members engaged in the central opening of the disk work in association with the urging means to position the disk concentrically with the disk motor shaft.

It is an object of the present invention to find a device which allows to overcome the problems due to higher rotation speeds of the disk shaped data carrier.

A solution to overcome the above mentioned problems is according to the invention found in a device for rotating inside of a disk player and / or recorder a disk shaped data carrier having an opening around a center of the disk shaped carrier. The device comprises at least a plate for supporting a surface of said disk shaped data carrier, fixing means which allow to removably fix the disk by inserting a part of the fixing means in the opening and driving means which rotate the data carrier by acting on the plate and / or the fixing means. The driving means are at least partly mechanically connected to the disk player and / or recorder. The device further comprises side moving means which allow the plate and the fixing means to laterally move inside the disk player and / or recorder in a rotation plane substantially perpendicular to an axis of rotation of the plate and the fixing means.

The plate and the fixing means move together with the disk inside the disk drive In a plane which has substantially a same orientation as centrifugal forces acting on a center of mass of a disk fixing means assembly which is located aside from a rotation axis of the plate and the fixing means imposed by the driving means. The vibrations on the disk player and / or recorder are reduced.

In a first preferred embodiment of the invention according to the invention the side moving means comprise sliding means which allow to move the driving means inside the player and / or recorder along directions which are parallel to the rotation plane and elastical elongation means fixed at one end to the player and / or recorder and at another end to the driving means, such that the driving means are positioned in a determined rest position at least when the driving means stop driving the data carrier.

An advantage of the preferred embodiment is that the fixing means may be mounted rigidly on e.g. a driving shaft of the driving means thus allowing for a very simple connection between driving means and fixing means.

In a second preferred embodiment according to the present invention the side moving means further comprise flexible transmission means through which the driving means act on the fixing means. An end of the flexible transmission means is connected to the driving means and another end is connected to the fixing means.

The second preferred embodiment allows to move the fixing means independently from the driving means. An advantage of this is that the moved mass is less than is if the driving means were to be moved as well.

In a third preferred embodiment according to the present invention the side moving means comprise first bearing means which are mounted on the fixing means, and the disk and / or recorder comprises at least a supporting surface parallel to the rotation plane, such that the first bearing means allow the fixing means to slide on the supporting surface while the fixing means rotate.

The third preferred embodiment shows a simple solution to realize a movement of the fixing means in the player and / or recorder.

In a fourth preferred embodiment according to the present invention the moving means comprise a sliding support and the disk and / or recorder comprises at least a supporting surface being parallel to the rotation plane ; the sliding support slides on the supporting surface and the sliding support has a drive opening through which the driving means act on the fixing means.

The fourth preferred embodiment is particularly advantageous to reduce the intensity of friction between the moving means and the supporting surface since only the fixing means are driven and rotated by the driving means, i.e. the moving means do not have to rotate in the same way as the fixing means.

In a fifth preferred embodiment according to the present invention the side moving means comprise a sliding support having a drive opening through which said driving means act on said fixing means. The disk and / or recorder comprises at least a supporting surface which is parallel to the rotation plane, such that the sliding support slides on the supporting surface. In the device, at least an elongated part of the fixing means is fitted through the drive opening together with second bearing means which allow the elongated part to rotate inside the drive opening. The driving means comprise a rotor magnet mounted on the elongated part and a stator electro-magnet mounted on the player and / or recorder such that the rotor magnet and the stator electro-magnet cooperate as an electric motor. The device further comprises centering means which position the fixing means in a central position at least when the driving means stop driving the data carrier.

The fifth preferred embodiment allows to minimize a weight and size of the device according to the invention.

Another solution to the above mentioned problem is according to the invention seen in a device for rotating inside of a disk player and / or recorder a disk shaped data carrier having an opening around a center of the disk shaped carrier, the device comprising at least fixing means which allow to removably fix the disk by inserting a part of the fixing means in said opening, and driving means which rotate the data carrier by acting on the fixing means. The driving means are at least partly mechanically connected to the disk player and / or recorder. The fixing means comprise an elongated part ; the driving means comprise a rotor magnet which is mounted on the elongated part and a stator electro-magnet mounted on said player and / or recorder such that the rotor magnet and the stator electro-magnet cooperate as an electric motor. The device further comprises centering means which position the fixing means in a central position at least when the driving means stop driving the data carrier.

The other solution according to the invention is a mechanically simple and cheap way of realizing the invention.

A further solution to the above mentioned problem is according to the invention found in a device for rotating inside of a disk player and / or recorder a disk shaped data carrier having an opening around a center of said disk shaped carrier, which comprises at least fixing means allowing to removably fix the disk by inserting a part of the fixing means in the opening, and driving means for generating a driving force to rotate the data carrier. The driving means are at least partly mechanically connected to the disk player and / or recorder and comprise compressor means to generate a stream of air and canalization means to direct the stream of air onto a surface which belongs to the data carrier and / or the fixing means such that a driving force is transmitted to the data carrier which sets the data carrier into rotation and such that an air cushion lifts the data carrier and the fixing means reducing mechanical friction between the fixing means and the driving means. The device further comprises centering means which position the fixing means in a central position at least when the driving means stop driving the data carrier.

The further solution according to the invention is particularly advantageous because it reduces sources of frictions.

In the following, ways of carrying out the invention claimed will be described using examples and referring to the drawings wherein :
Fig 1 contains a schematical drawing of a player and/or recorder according to prior art,
Fig 2 contains a schematical isometrical representation of a device according to the invention and comprising elastical elongation means,
Fig 3 contains a schematical representation of a device according to the invention comprising sliding fixing means,
Fig 4 contains a schematical representation of a device realized according to the invention and comprising a sliding support,
Fig 5 contains a schematical representation of a device realized according to the invention comprising a sliding support,
Fig 6 contains a schematical representation of an advantageous embodiment of a device according to the invention,
Fig 7 contains a schematical representation of a device according to the invention in which the data carrier levitates,
Fig 8 shows a schematical representation of a device according to the invention which comprises pneumatical driving means,
Fig 9 contains an explanatory drawing to visualize an action of a stream of air in fig 8,
Fig 10 shows a schematical representation of a pneumatically driven device according to the invention,
Fig 11 contains a schematical representation of a device according to the invention which comprises pneumatical driving means.

All through the specification same references will be used to designate same parts. It is understood that the examples described hereafter are given to better understand the invention and are not limitative of the claimed invention. A person skilled in the art may well modify the described examples and remain in the scope of the present invention.

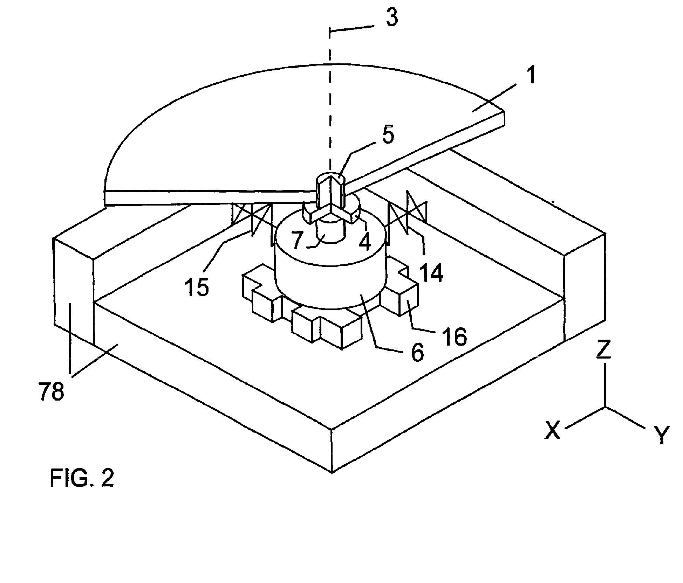

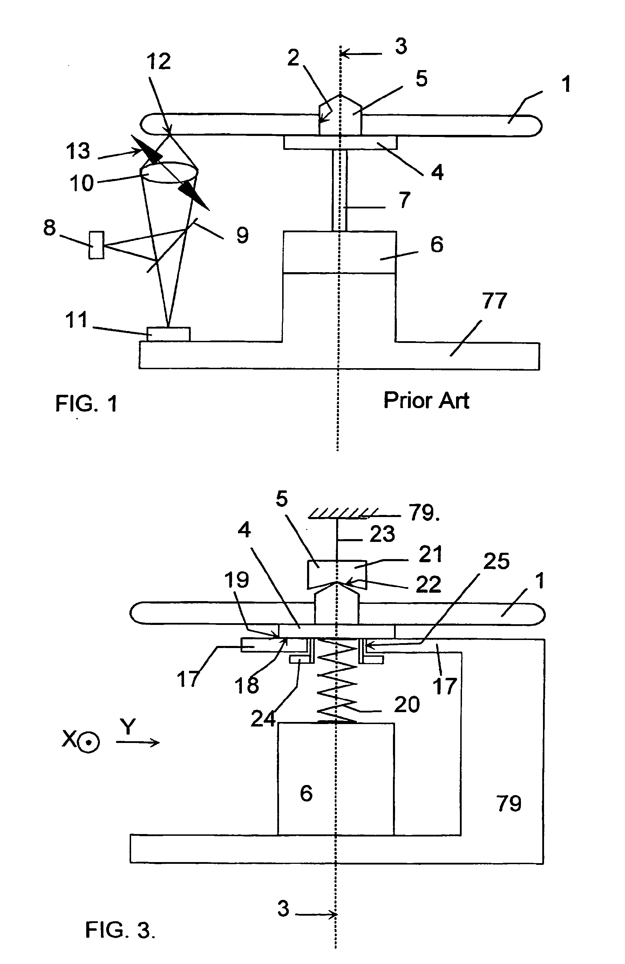

Figure 1 contains a schematical representation of a disk player and/or recorder according to prior art. More precisely the example shown in fig 1 is an optical disk player and/or recorder seen in a sideview plane which is perpendicular to a disk shaped data carrier 1. The disk shaped data carrier 1, i.e. an optical disk has an opening 2 at its center. The data carrier 1 has data stored along tracks formed on a layer (not shown) of the data carrier 1. The data tracks form concentrical circles or spirals on the disk and remain in a rotation plane which is perpendicular to the sideview plane of the figure. The concentrical circles or the spirals have a center which ideally corresponds to a rotation axis 3 represented in fig 1 using a doted line. Preferably geometrical centers of the data carrier 1 and of the opening 2 correspond to the center of the concentrical circles or the spiral, i.e. the latter centers lye on the rotation axis 3. Fixing means comprise a plate 4 which supports a surface of the data carrier 1, and a part 5 which is inserted into the opening 2 such that the data carrier 1 is removably fixed to the fixing means 4 and 5. The part 5 of the fixing means may be a bobby well known by a person skilled in the art. Such a bobby may for example have on its outer periphery a number of balls pushed away from the rotation axis 3 by springs (not shown) such to maintain the data carrier 1 on the bobby. Driving means 6 are fixed to the disk player 77 represented by a hat shaped block for reasons of simplicity. The driving means 6 may for example comprise an electrical motor. An axis of the electrical motor is connected to rigid transmission means 7 which transmit a rotation of the electrical motor to the fixing means 4 and 5. This way the driving means 6 act on the fixing means 4 and 5, and rotate the data carrier 1 around the rotation axis 3.

The data stored along tracks on the data carrier 1 are read out using reading means which comprise a light source 8, a mirror 9 for redirecting light from the light source 8 to the data carrier 1, and focusing means 10 to focus the light beam on the data track being read. Light reflected by the data carrier 1 is detected by detection means 11 in order to restitute data stored on the data carrier 1. The light beam is focused on the track being read in a light spot 12. A servo system (not shown) continually verifies if the light spot 12 remains on the track being read. In case of a deviation of the light spot from the track the servo system controls radial positioning means and focusing means (not shown) to re-position the light spot 12 in radial but also in height direction, the latter corresponding to the direction of the rotation axis 3. The positioning in radial and height direction is schematically represented by a double arrow 13.

Frequently a mass center (not shown) of the data carrier 1 and/or a mass center of an assembly comprising the data carrier 1, the fixing means 4 and 5 and perhaps the driving means 6, does not correspond to the center defined by the rotation axis 3. When the disk is rotated a centrifugal force occurs which acts on the mass center, and tends to pull the data carrier 1 away from the rotation axis 3. At relatively high rotation speeds of the data carrier 1 the centrifugal force, which is asymmetrical relatively to the rotation axis 3 induces vibrations which impact on the disk player 77 and induce reading and/or writing errors in the reading means, the latter not being able anymore to keep the light spot 12 on the track being read.

The reading means shown in fig 1 are well known from a person skilled in the art and will for reasons of simplicity be omitted from the following figures 2 to 11.

The example described in fig 1 relates to an optical disk drive. It is understood that any other kind of disk drive, e.g. a magnetical or an opto-magnetical disk drive could also be used to explain the invention. Of course a person skilled in the art would then use adapted reading and/or writing means.

Fig 2 contains a schematical isometrical view of a device for rotating the disk shaped data carrier 1 (shown in part only). The data carrier 1 is fixed using fixing means 4 and 5 (shown in part only), the part 5 being inserted into the opening 2. The driving means 6 act on the fixing means 4 and 5 through transmission means 7. The driving means 6 are fixed to a disk player 78 through elastical elongation means, e.g. a first and a second spring 14 and 15. The driving means 6 lye on sliding means 16 which allows them to move in X and Y direction in the disk player 78. In a case where the driving means are at rest, i.e. the driving means 6 do not act on the fixing means 4, 5, the springs 14 and 15 keep the driving means 6 in a determined rest position.

As soon as the driving means 6 start to rotate the data carrier 1, the asymmetrical centrifugal forces which act on the eccentered mass center cause the springs 14 and 15 to elongate or shorten in X and Y direction respectively. The rotation axis 3 around which the data carrier 1 and the fixing means 4 and 5 are rotated remains parallel to the Z direction but starts moving in circles around the determined rest position. In fact, an assembly comprising the data carrier 1, the fixing means 4 and 5 and the transmission means 7 undergoes a gyroscopic movement. No vibration of the player 78 is caused by the movement of the assembly. The fact that the rotation axis 3 now describes circles around the determined rest position creates a periodic deviation of the data track being read relatively to the reading means. This periodic deviation needs to be corrected by the servo means.

A disk player 79 in fig 3 has the driving means 6 fixed to it in a manner similar as in fig 1. The disk player 79 comprises a platform 17 which presents a supporting surface 18 to the fixing means' plate 4. First bearing means which may not be seen but who's location is indicated by an arrow 19 are located between the fixing means' plate 4 and the supporting surface 18 and allow the fixing means 4 and 5, and the data carrier 1 to slide on the disk player 79. The driving means 6 act on the fixing means 4 and 5 through flexible transmission means 20 which allows to transmit a rotation movement from the driving means 6 to the data carrier 1 while the sliding means 4 and 5, and the data carrier 1 are also allowed to move in Y and X direction. Centering means 21 apply a force on the part 5 of the fixing means in order that the fixing means 4 and 5 remain in contact with the supporting surface 18.

The first bearing means in 19 must be realized such that the fixing means' plate 4 may rotate and slide sideways at the same time on the supporting surface 18. The first bearing means 19 may for example be realized using a layer of grease or conventional ball bearings.

The centering means 21 comprises a conical recess 22 and is mounted on the disk player 79 using a flexible bar 23. The centering means 21 are realized such that the fixing means return to a central position which correspond to the rest position of the rotation axis 3 when the driving mean 6 are at rest. The flexible bar 23 enables the centering means 21 to accompany the fixing means 4 and 5 during the gyroscopic movement.

Alternately it may be found that the fixing means 4 and 5 receive an edge 24 which grabs through a drive opening 25 of the disk player platform 17. In this case, the centering means 21 may be omitted because the edge 24 prevents the fixing means of departing from the supporting surface 18 under the effect of the flexible transmission means 20. Preferably, the edge 24 is equipped with bearing means similar to the first bearing means in 19 such that the fixing means 4, 5 and the edge 24 may freely slide and rotate on supporting surfaces of the platform 17.

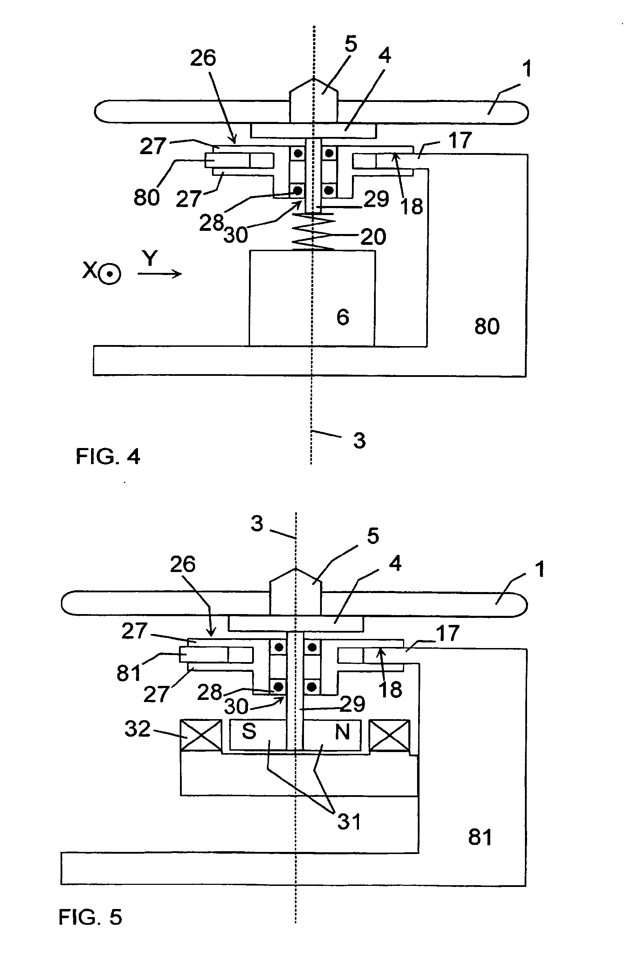

Fig 4 shows a disk player 80 to which the driving means 6 are rigidly fixed. A Sliding support 26 comprises edges 27 which allow to slide the sliding support 26 on supporting surfaces 18 of the disk player platform 17. Second bearing means 28 allow the fixing means 4 and 5 to rotate relatively to the sliding support 26 by means of an elongated part 29 of said fixing means which passes through a drive opening 30 of the second bearing means 28. The sliding support 26 merely slides in X or Y direction. Compared to the disk player 79 shown in fig 3 the driving means 6 in fig 4 need less work to rotate the data carrier 1 because no energy losses occur through friction of the fixing means plate 4 on the disk player 80.

Optionally centering means as shown in fig 3 may also be used in the disk player shown in fig 4. The centering means position the fixing means to a central rest position at least when the driving means 6 rest.

Fig 5 shows a disk player 81 which similar to the disk player 80 in fig 4 comprises a disk player platform 17 having supporting surfaces 18. A sliding support 26 comprises edges 27 which allow to slide the sliding support 26 on the supporting surfaces 18. The fixing means comprise an elongated part 29 which is inserted in a drive opening 30 of said sliding support 26 together with second bearing means 28. This way the fixing means 4, 5 and 29 may rotate relatively to the sliding support 26. A rotor magnet 31 is fixed at an end of the elongated part 29, and rotates together with the fixing means. The rotor magnet 31 is part of driving means which further comprise a stator electro-magnet 32 rigidly mounted on the disk player 81. The stator electro-magnet 32 is an electro-magnet which together with the rotor magnet 31 cooperates as an electric motor used to drive the fixing means and the data carrier 1. When the driving means are at rest the rotor magnet 31 is positioned between components of the stator electro-magnet 32 such that it is separated from the latter by an air gap. The latter air gap allows the rotor magnet 31 to adopt a gyroscopic movement when the fixing means 4, 5, 29 and the data carrier are brought into high rotation speed. The sliding support 26 allows the rotation axis 3 to rotate around a rest position of the rotation axis 3 while the data carrier 1 is rotated around the rotation axis 3. This way no vibrations due to the eccentered mass center of the fixing means/data carrier assembly is transmitted to the disk player 81.

Optionally, centering means similar to the one shown in figure 3 may be used in the disk player shown in fig 5. The centering means position the fixing means to a central rest position at least when the driving means rest.

Optionally, limiting means (not shown) may be mounted on the platform 17 or nearby a side of the centering means in order to limitate a sideways sliding of the sliding support 26 and such to avoid a contact of the rotor magnet 31 with the stator magnet 32.

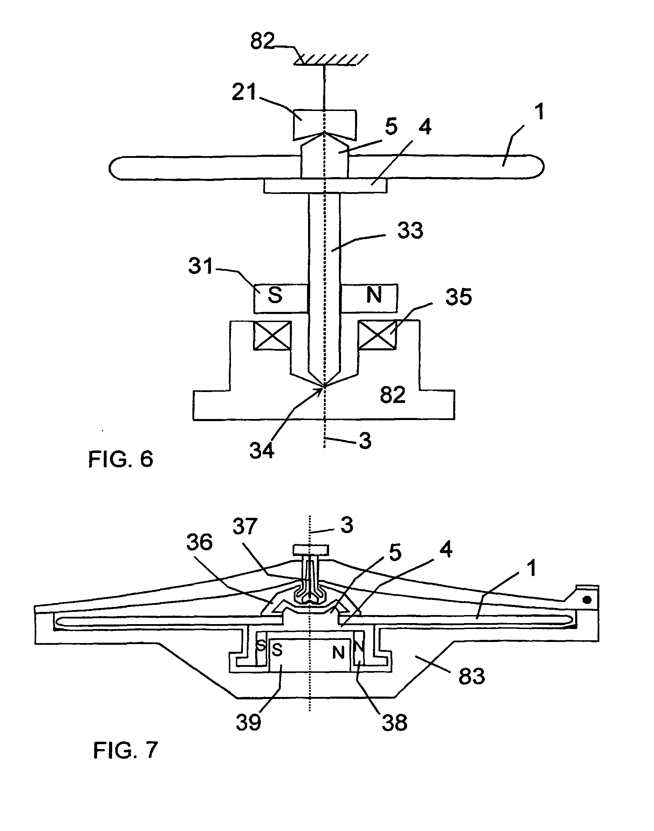

Fig 6 shows a disk player 82 in which the fixing means comprise an elongated part 33 fixed to the plate 4 and the part 5. The elongated part 33 is at one end terminated by a tip which lies on a point bearing recess 34 integral to the player 82. Opposite to the tip end of the elongated part 33 the part 5 is terminated by another tip which cooperates with a further point bearing comprised in the centering means 21. Hence the assembly of the fixing means 4, 5, 33 and the data carrier 1 rotates between two point bearings. The centering means 21 are further used to position the fixing means in a central rest position when the assembly stops rotating, and guide the fixing means while the latter assembly goes in a gyroscopic movement during its rotation around the rotation axis 3. The fixing means and the data carrier 1 are driven by driving means which comprise a rotor magnet 31 mounted on the elongated part 33, and a stator electro-magnet 35 which is mounted on the disk player 82. The stator electro-magnet 35 is an electro-magnet and cooperates with the rotor-magnet 31 as an electrical motor used to rotate the fixing means and the data carrier 1. While the data carrier 1 rotates around the rotation axis 3 and the assembly adopts the gyroscopic movement around the rest position of rotation axis 3, the rotation axis 3 may also rotate around a point determined by the contact of the elongate part 33 and the point bearing 34. The latter rotation of the rotation axis 3 will cause a focus deviation in the reading means (not shown) which will have to be corrected by refocusing the light spot and the track being read.

Fig 7 shows a simplified disk player 83 in which a part 5 of the fixing means is centered by annular centering means 36. An elastical bar 37 allows to keep the annular centering means 36 in a central rest position when the fixing means and the data carrier 1 are at rest. A rotor magnet 38 mounted on edges of the plate 4 of the fixing means cooperates as part of an electrical motor with a stator electro magnet 39 fixed on the disk player 83. When the stator electro magnet 39 is provided with current the rotor magnet 38 and thus the fixing means 4, 5 and the data carrier 1 are forced towards the annular centering means 36 and start rotating. Air gaps between the rotor magnet 38 and the stator electro-magnet 39 allow the rotating assembly to adopt a gyroscopic movement around a rest position of the rotation axis 3.

In a preferred embodiment of the disk player 83 shown in fig 7 a point bearing mounted at the rest position of rotation axis 3 on the static electrode magnet 39 allows the plate 4 of the fixing means to remain at a determined distance from the static electro-magnet 39 even when no current is provided. The latter point bearing is not shown in fig 7.

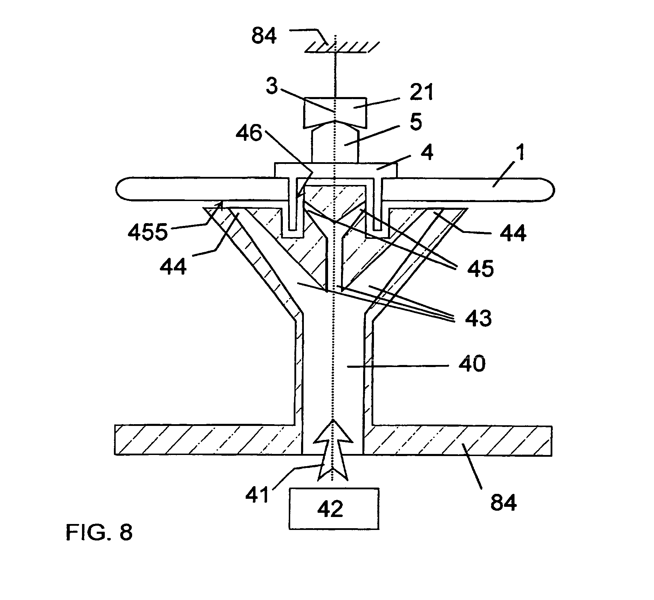

Fig 8 shows a disk player 83 which comprises pneumatical driving means. The data carrier 1 has edges of the plate 4 of the fixing means inserted into its opening. The part 5 of the fixing means cooperates with centering means 21 which allow to center the fixing means in a central rest position at least when the data carrier stops rotating, and to guide the assembly of the fixing means and the data carrier in the gyroscopic movement while the data carrier 1 is rotated. Driving means comprise canalization means 40 which at one end receive a stream of air 41 generated by compressor means 42. The stream of air 41 is splitted up by smaller canalization means 43 which terminate in nozzles 44 and 45. The nozzles 44 direct the stream of air 41 onto a surface 455 of the data carrier 1 such to transmit to the data carrier 1 a force which sets the data carrier 1 into rotation and a lifting force which keeps the data carrier 1 at a determined height from the nozzles 44. The nozzles 45 direct the stream of air at an outer periphery of a tube formed by the canalization means and which is surrounded by a further tube realized by the edges of the plate 4. The stream of air blowing out of the nozzles 45 pushes on a surface 46 of the edges of the plate 4 and prevents that the fixing means come in contact with the outer periphery of the canalization means. The result is that during rotation of the data carrier 1 and the fixing means 4, 5 an air cushion between the canalization means and the rotating assembly minimizes friction and allows the rotating assembly to adopt a gyroscopic movement caused by an eccentered mass center of the rotated assembly. No vibrations are transmitted to the disk player 84.

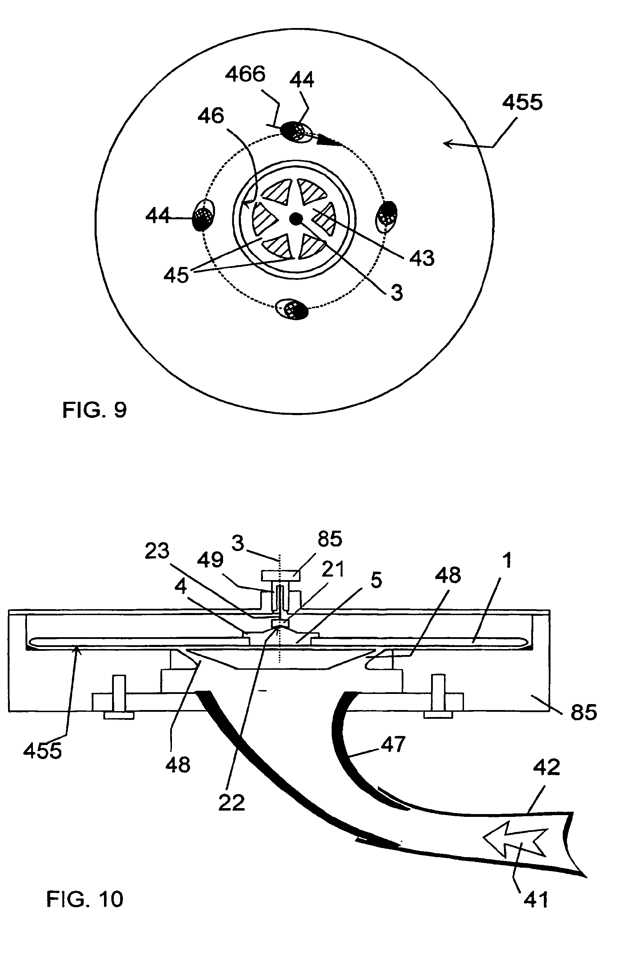

Fig 9 shows a view of the device shown in fig 8 along a plane which through is perpendicular to the plane of the figure 8. The view is taken through the data carrier 1 looking from the plate 4 of the fixing means (not shown) toward the canalization means. Four nozzles 44 are symmetrically located around a rest position of the rotation axis 3 represented by a black spot. The parts of nozzles 44 which are darkly filled in the figure are the ones that are further away of the surface 455 whereas the parts of the nozzles 44 which are filled with a cross lines patterns and the ones left empty repectively are nearer to the surface 455. This way of illustrating the nozzles 44 shows that a stream ofair coming from the darkly illustrated part to the empty illustrated part of nozzles 44 blows in a direction represented by the arrow 466 and accordingly creates a force on the surface 455 which rotates the data carrier 1.

The nozzles 45 which end canalization means 43 are distributed symmetrically at six points of the outer periphery of the canalization means and direct the air stream of the inner surface 46 of the fixing means edges.

Fig 10 shows a disk player 85 having another embodiment of pneumatical driving means. The part 5 of the fixing means is inserted in the opening of the data carrier 1 and once inserted a surface of the part 5 closes the opening of the data carrier 1 and lies in the same plane as the surface 455 of the data carrier 1. An output of the compressor means 42 blows an stream of air 41 into canalization means 47. The stream of air is splitted into a plurality of nozzles 48, the latter being symmetrically positioned around a determined rest position of the rotation axis 3. Centering means 21 comprising a conical recess 22 are fixed to an elastical bar 23 and position the fixing means in the determined rest position when the data carrier 1 is at rest. A sideways movement of the elastical bar 23 is limited by the wall of a tube 49 placed around the elastical bar 23 and fixed at one end to the disk player 85.

The nozzles 48 direct the stream of air on the surface 455 such to lift the data carrier 1 and the fixing means 4, 5 by creating an air cushion between the latter and the disk player 85, and such to create a driving force on the data carrier 1 in order to rotate the latter at relatively high speed. The assembly of the data carrier and the fixing means 4, 5 starts to go into a gyroscopic movement around the rest position of the rotation axis 3. No vibrations resulting from an eccentered mass center of the assembly are transmitted to the disk player 85.

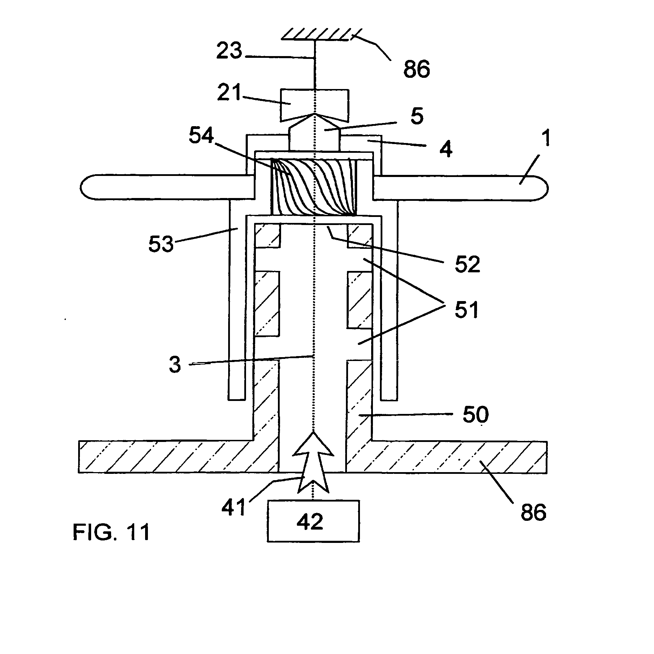

Fig 11 shows a disk player 86 in which the driving means comprise a first tube 50 into which a stream of air 41 is blown by compressor means 42. The first tube 50 has openings at its periphery terminated by nozzle 51. The first tube 50 has at another end an opening 52 through which a part of the stream ofair 41 blows. The fixing means comprise a second tube 53 which at one end is fixed to the plate 4 and at another end as an opening which allows to fit the second tube 53 over the first tube 50 thereby covering nozzles 51. An inner size of the second tube 53 is dimensioned such that an air gap remains between the tube 53 and the first tube 50 when the latter is inserted into the former. The end of the second tube 53 located near to the plate 4 is terminated by a turbine 54 which offers surfaces to the air stream 41 exiting the opening 52 of the first tube 50 such that the fixing means 53, 4, 5 and the data carrier 1 are set in rotation. At the same time the second tube 53 is lifted at a determined distance from the first tube 50 such that it may freely rotate around the first tube 50. The centering means 21, 23 guide the fixing means in the gyroscopic movement which is adopted during rotation of the data carrier 1.

## Claims

1. A device for rotating inside of a disk player and/or recorder a disk shaped data carrier (1) having an opening (2) around a center of said disk shaped carrier, said device comprising at least a plate (4) for supporting a surface of said disk shaped data carrier (1), fixing means (5) for removably fixing said disk shaped data carrier (1) to said plate (4) by inserting a part of said fixing means (5) in said opening (2), a driving means (6) which rotates said disk shaped data carrier (1) by acting on said plate (4) and/or said fixing means (5), said driving means (6) being at least partly mechanically connected to said disk player and/or recorder, and a side moving means (14, 15) which allows said fixing means (5) to laterally move in a movement plane substantially perpendicular to an axis of rotation (3) of said plate (4) and said fixing means (5), **characterized in that** said side moving means (14, 15) further allows said plate (4) to laterally move in said movement plane.

2. A device according to claim 1, **characterized in that** said side moving means comprises a sliding means (16) which allows to move said driving means (6) inside said player and/or recorder along directions (X, Y) which are parallel to said movement plane, and an elastical elongation means (14, 15) fixed at one end to said player and/or recorder (78) and at another end to said driving means (6), such that said driving means (6) are positioned in a determined rest position at least when said driving means (6) stop driving said disk shaped data carrier (1).

3. A device according to claim 1 or 2, **characterized in that** said side moving means further comprises a flexible transmission means (20) through which said driving means (6) act on said plate (4) and/or said fixing means (5), an end of which is connected to said driving means (6) and another end of which is connected to said plate (4) and/or said fixing means (5).

4. A device according to claim 3, **characterized in that** said side moving means comprises a first bearing means (19), said first bearing means (19) being mounted on said plate (4), and said disk player and/or recorder (79) comprises at least a supporting surface (18) being parallel to said movement plane, such that said first bearing means (19) allows said plate (4) and said fixing means (5) to slide on said supporting surface (18) while said plate (4) and said fixing means (5) rotate.

5. A device according to claim 3, **characterized in that** said side moving means further comprises a sliding support (26), and **in that** said disk player and/or recorder (80) comprises at least a supporting surface (18) being parallel to said movement plane, such that said sliding support (26) slides on said supporting surface (18), said sliding support (26) having a drive opening (30) through which said driving means (6) act on said plate (4) and/or said fixing means (5).

6. A device according to claim 5, **characterized in that** at least an elongated part (29) of said plate (4) and/or said fixing means (5) is fitted through said drive opening (30) together with a second bearing means (28) which allows said elongated part (29) to rotate inside said drive opening (30), said elongated part (29) being connected to said other end of said flexible transmission means (20).

7. A device according to anyone of claims 1 to 6, **characterized in that** it further comprises a centering means (21) which positions said plate (4) and said fixing means (5) in a central position at least when said driving means (6) stop driving said disk shaped data carrier (1).

8. A device according to claim 1, **characterized in that** said side moving means comprises
• a sliding support (26, 27) having a drive opening (30) through which said driving means (31, 32) act on said plate (4) and/or said fixing means (5),
and **in that** said disk player and/or recorder (81) comprises at least
• a supporting surface (18) being parallel to said rotation plane, such that said sliding support (26, 27) slides on said supporting surface (18),
said plate (4) or said fixing means (5) further comprising an elongated part (29) fitted through said drive opening (30) together with a second bearing means (28) which allows said elongated part (29) to rotate inside said drive opening (30), and said driving means (6) comprising a rotor magnet (31) mounted on said elongated part (29) and a stator electro-magnet (32) mounted on said disk player and/or recorder such that said rotor magnet (31) and said stator electro-magnet (32) cooperate as an electric motor, said device further comprising centering means (21, 22, 23) which position said plate (4) and said fixing means (5) in a central position at least when said driving means (6) stop driving said disk shaped data carrier (1).

## Patentansprüche

1. Einrichtung zum Drehen eines scheibenförmigen Datenträgers (1) mit einer Öffnung (2) um eine Mitte des scheibenförmigen Trägers herum in einem Disk-Player und/oder -Recorder, wobei die Einrichtung folgendes umfaßt: mindestens eine Platte (4) zum Stützen einer Oberfläche des scheibenförmigen Datenträgers (1), Fixiermittel (5) zum entfernbaren Fixieren des scheibenförmigen Datenträgers (1) an der Platte (4) durch Einsetzen eines Teils der Fixiermittel (5) in die Öffnung (2), ein Antriebsmittel (6), das den scheibenförmigen Datenträger (1) durch Wirken auf die Platte (4) und/oder die Fixiermittel (5) dreht, wobei die Antriebsmittel (6) zumindest teilweise mechanisch mit dem Disk-Player und/oder -Recorder verbunden sind und ein Seitenbewegungsmittel (14, 15), das es gestattet, daß sich die Fixiermittel (5) seitlich in einer Bewegungsebene im wesentlichen senkrecht zu einer Rotationsachse (3) der Platte (4) und der Fixiermittel (5) bewegt, **dadurch gekennzeichnet, daß** das Seitenbewegungsmittel (14, 15) weiterhin gestattet, daß sich die Platte (4) in der Bewegungsebene seitlich bewegt.

2. Einrichtung nach Anspruch 1, **dadurch gekennzeichnet, daß** das Seitenbewegungsmittel ein Gleitmittel (16) umfaßt, das es gestattet, die Antriebsmittel (6) in dem Player und/oder Recorder entlang Richtungen (X, Y) zu bewegen, die parallel zu der Bewegungsebene verlaufen, und ein elastisches Verlängerungsmittel (14, 15), das an einem Ende an dem Player und/oder Recorder (78) und an einem anderen Ende an den Antriebsmitteln (6) fixiert ist, so daß die Antriebsmittel (6) in einer bestimmten Ruheposition zumindest dann positioniert sind, wenn die Antriebsmittel (6) den scheibenförmigen Datenträger (1) nicht mehr antreiben.

3. Einrichtung nach Anspruch 1 oder 2, **dadurch gekennzeichnet, daß** das Seitenbewegungsmittel weiterhin ein flexibles Transmissionsmittel (20) umfaßt, durch das die Antriebsmittel (6) auf die Platte (4) und/oder die Fixiermittel (5) wirken, von denen ein Ende mit den Antriebsmitteln (6) verbunden ist und von denen ein anderes Ende mit der Platte (4) und/oder den Fixiermitteln (5) verbunden ist.

4. Einrichtung nach Anspruch 3, **dadurch gekennzeichnet, daß** das Seitenbewegungsmittel ein erstes Lagermittel (19) umfaßt, wobei das erste Lagemittel (19) an der Platte (4) montiert ist, und der Disk-Player und/oder -Recorder (79) mindestens eine Stützfläche (18) parallel zu der Bewegungsebene umfaßt, so daß das erste Lagermittel (19) gestattet, daß die Platte (4) und die Fixiermittel (5) auf der Stützfläche (18) gleiten können, während sich die Platte (4) und die Fixiermittel (5) drehen.

5. Einrichtung nach Anspruch 3, **dadurch gekennzeichnet, daß** das Seitenbewegungsmittel weiterhin eine Gleitstütze (26) umfaßt und daß der Disk-Player und/oder -Recorder (80) mindestens eine Stützoberfläche (18) parallel zu der Bewegungsebene umfaßt, so daß die Gleitstütze (26) auf der Stützoberfläche (18) gleitet, wobei die Gleitstütze (26) eine Antriebsöffnung (30) aufweist, durch die die Antriebsmittel (6) auf die Platte (4) und/oder die Fixiermittel (5) wirken.

6. Einrichtung nach Anspruch 5, **dadurch gekennzeichnet, daß** mindestens ein länglicher Teil (29) der Platte (4) und/oder der Fixiermittel (5) durch die Antriebsöffnung (30) zusammen mit einem zweiten Lagermittel (28) gesteckt ist, wodurch sich das längliche Teil (29) innerhalb der Antriebsöffnung (30) drehen kann, wobei der längliche Teil (29) mit dem anderen Ende des flexiblen Transmissionsmittels (20) verbunden ist.

7. Einrichtung nach einem der Ansprüche 1 bis 6, **dadurch gekennzeichnet, daß** sie weiterhin ein Zentriermittel (21) umfaßt, das die Platte (4) und die Fixiermittel (5) in einer zentralen Position zumindest dann positioniert, wenn die Antriebsmittel (6) den scheibenförmigen Datenträger (1) nicht länger antreiben.

8. Einrichtung nach Anspruch 1, **dadurch gekennzeichnet, daß** das Seitenbewegungsmittel folgendes umfaßt:
• eine Gleitstütze (26, 27) mit einer Antriebsöffnung (30), durch die die Antriebsmittel (31, 32) auf die Platte (4) und/oder die Fixiermittel (5) wirken,
und daß der Disk-Player und/oder -Recorder (81) mindestens folgendes umfaßt:
• eine Stützoberfläche (18) parallel zu der Rotationsebene, so daß die Gleitstütze (26, 27) auf der Stützoberfläche (18) gleitet,
wobei die Platte (4) oder die Fixiermittel (5) weiterhin ein längliches Teil (29) umfassen, das durch die Antriebsöffnung (30) zusammen mit einem zweiten Lagermittel (28) gesteckt ist, wodurch sich das längliche Teil (29) innerhalb der Antriebsöffnung (30) drehen kann, und wobei die Antriebsmittel (6) einen Rotormagneten (31), der an dem länglichen Teil (29) montiert ist, und einen Statorelektromagneten (32), der an dem Disk-Player und/oder -Recorder montiert ist, umfassen, so daß der Rotormagnet (31) und der Statorelektromagnet (32) als ein Elektromotor zusammenwirken, wobei die Einrichtung weiterhin Zentriermittel (21, 22, 23) umfaßt, die die Platte (4) und die Fixiermittel (5) in einer zentralen Position zumindest dann positionieren, wenn die Antriebsmittel (6) den scheibenförmigen Datenträger (1) nicht mehr antreiben.

## Revendications

1. Un dispositif de rotation dans un lecteur et/ou un enregistreur de disque d'une porteuse de données en forme de disque (1) possédant une ouverture (2) autour du centre de ladite porteuse en forme de disque, ledit dispositif comprenant au moins une plaque (4) pour maintenir une surface de ladite porteuse de données en forme de disque (1), des moyens de fixation (5) pour fixer de manière amovible ladite porteuse de données en forme de disque (1) à ladite plaque (4) en insérant une pièce desdits moyens de fixation (5) dans ladite ouverture (2), un moyen d'entraînement (6) qui fait tourner ladite porteuse de données en forme de disque (1) en agissant sur ladite plaque (4) et/ou sur lesdits moyens de fixation (5), ledit moyen d'entraînement (6) étant au moins en partie mécaniquement connecté auxdits lecteur et/ou enregistreur de disque, et des moyens de déplacement latéral (14 et 15) qui permettent auxdits moyens de fixation (5) de se déplacer latéralement dans un plan de déplacement sensiblement perpendiculaire à un axe de rotation (3) de ladite plaque (4) et desdits moyens de fixation (5), **caractérisé en ce que** lesdits moyens de déplacement latéral (14 et 15) permettent en plus à ladite plaque (4) de se déplacer latéralement dans ledit plan de déplacement.

2. Un dispositif selon la revendication 1, **caractérisé en ce que** lesdits moyens de déplacement latéral comprennent un moyen de coulissement (16) qui permet de déplacer ledit moyen d'entraînement (6) dans lesdits lecteur et/ou enregistreur dans des directions (X et Y) parallèles audit plan de déplacement, et des moyens d'allongement élastique (14 et 15) fixés à une extrémité auxdits lecteur et/ou enregistreur (78) et à une autre extrémité audit moyen d'entraînement (6), de sorte que ledit moyen d'entraînement (6) soit placé dans une position de repos déterminée, au moins lors de l'arrêt de l'entraînement de ladite porteuse de données en forme de disque (1) par ledit moyen d'entraînement (6).

3. Un dispositif selon la revendication 1 ou 2, **caractérisé en ce que** lesdits moyens de déplacement latéral comprennent en outre un moyen de transmission flexible (20) via lequel ledit moyen d'entraînement (6) agit sur ladite plaque (4) et/ou lesdits moyens de fixation (5), dont une extrémité est connectée audit moyen d'entraînement (6) et dont une autre extrémité est connectée à ladite plaque (4) et/ou auxdits moyens de fixation (5).

4. Un dispositif selon la revendication 3, **caractérisé en ce que** lesdits moyens de déplacement latéral comprennent un premier moyen d'appui (19), ledit premier moyen d'appui (19) étant monté sur ladite plaque (4), et **en ce que** lesdits lecteur et/ou enregistreur de disque (79) comprennent au moins une surface de maintien (18) parallèle audit plan de déplacement, de sorte que ledit premier moyen d'appui (19) permette à ladite plaque (4) et auxdits moyens de fixation (5) de glisser sur ladite surface de maintien (18), alors que ladite plaque (4) et lesdits moyens de fixation (5) tournent.

5. Un dispositif selon la revendication 3, **caractérisé en ce que** lesdits moyens de déplacement latéral comprennent en outre un support de coulissement (26), et **en ce que** lesdits lecteur et/ou enregistreur de disque (80) comprennent au moins une surface de maintien (18) parallèle audit plan de déplacement, de sorte que ledit support de coulissement (26) glisse sur ladite surface de maintien (18), ledit support de coulissement (26) possédant une ouverture d'entraînement (30), via laquelle ledit moyen d'entraînement (6) agit sur ladite plaque (4) et/ou lesdits moyens de fixation (5).

6. Un dispositif selon la revendication 5, **caractérisé en ce qu'**au moins une pièce allongée (29) de ladite plaque (4) et/ou desdits moyens de fixation (5) s'ajuste à ladite ouverture d'entraînement (30), avec un second moyen d'appui (28) permettant à ladite pièce allongée (29) de tourner dans ladite ouverture d'entraînement (30), ladite pièce allongée (29) étant connectée à ladite autre extrémité dudit moyen de transmission flexible (20).

7. Un dispositif selon l'une quelconque des revendications 1 à 6, **caractérisé en ce qu'**il comprend en outre un moyen de centrage (21) qui place ladite plaque (4) et lesdits moyens de fixation (5) dans une position centrale, au moins lors de l'arrêt de l'entraînement de ladite porteuse de données en forme de disque (1) par ledit moyen d'entraînement (6).

8. Un dispositif selon la revendication 1, **caractérisé en ce que** lesdits moyens de déplacement latéral comprennent :
• des supports de coulissement (26 et 27) possédant une ouverture d'entraînement (30) via laquelle lesdits moyens d'entraînement (31, 32) agissent sur ladite plaque (4) et/ou lesdits moyens de fixation (5), et **en ce que** lesdits lecteur et/ou enregistreur de disque (81) comprennent au moins :
• une surface de maintien (18) parallèle audit plan de rotation, de sorte que lesdits supports de coulissement (26 et 27) glissent sur ladite surface de maintien (18), ladite plaque (4) ou lesdits moyens de fixation (5) comprenant en outre une pièce allongée (29) ajustée à ladite ouverture d'entraînement (30), avec un second moyen d'appui (28) qui permet à ladite pièce allongée (29) de tourner dans ladite ouverture d'entraînement (30), et ledit moyen d'entrainement (6) comprenant un aimant rotor (31) monté sur ladite pièce allongée (29) et un électroaimant stator (32), monté sur lesdits lecteur et/ou enregistreur de disque, de sorte que ledit aimant rotor (31) et ledit électroaimant stator (32) coopèrent comme dans un moteur électrique, ledit dispositif comprenant en outre des moyens de centrage (21, 22, 23) qui placent ladite plaque (4) et lesdits moyens de fixation (5) dans une position centrale, au moins lors de l'arrêt de l'entraînement de ladite porteuse de données en forme de disque (1) par ledit moyen d'entraînement (6).
